# EUROPEAN PATENT APPLICATION

(11) **EP 1 840 266 A1**
(43) Date of publication of application: **03.10.2007**
(21) Application number: 06111839.4
(22) Date of filing: 28.03.2006
(51) Int. Cl.: E01C 9/00

(54) **Plate-shaped construction element**

(71) Applicant: Sell Kunststoffen B.V., 3861 RD Nijkerk (NL)
(72) Inventor: Dullemond, Willem, 3862 ZR, Nijkerk (NL)
(74) Representative: Voncken, Bartholomeus Maria Ch.

(57) **Abstract**

Plate-shaped construction element for paving surfaces and receiving filler, such as gravel, earth, grass and the like, having an upper side (1) and a lower side (2) and comprising an array of interconnected cells (3) positioned adjacently according to a predetermined pattern, wherein each cell comprises a circumferential wall (4) extending at least partially inclined in such a manner that the cell at least partially tapers from the upper side of the construction element towards the lower side. The wall of the cell at least at its lower part is double-walled with an inner wall (4.1) and an outer wall (4.2), wherein said inner and outer walls diverge as seen in a direction towards the lower side of the construction element.

## Description

The invention relates to a plate-shaped construction element for paving surfaces and receiving filler, such as gravel, earth, grass and the like, having an upper side and a lower side and comprising an array of interconnected cells positioned adjacently according to a predetermined pattern, wherein each cell comprises a circumferential wall extending at least partially inclined in such a manner that the cell at least partially tapers from the upper side of the construction element towards the lower side.

Such a plate shaped construction element, as is known for example from EP-A-1.022.388 in the name of applicant, can be used for car parks, public event and recreational parks and for banks and shores of rivers and the like. As a result of the inclined position of at least part of the circumferential wall of this known plate-shaped construction element, a rigid and stable construction element is formed, wherein especially the resistance against forces directed downwardly in an inclined manner, which for example occur upon acceleration and deceleration of vehicles, is increased. Further, the downwardly tapering shape of the cells is helpful in maintaining the filler on its place, whereas the upwardly tapering shape which is created between the circumferential walls of adjacent cells is helpful in preventing a subsidence of the construction elements when loaded (for example by the weight of a vehicle).

It is an object of the present invention to further improve such a plate-shaped construction element.

Thus, in accordance with the present invention the plate-shaped construction element is characterized in that the wall of the cell at least at its lower part is double walled with an inner wall and an outer wall, wherein said inner and outer walls diverge as seen in a direction towards the lower side of the construction element.

As a result of the double-walled configuration of the wall of the cell with diverging inner and outer walls, a tapering space is defined between said inner and outer walls which opens towards the lower side of the construction element and narrows toward the upper side of the construction element and which, thus, is very effective in preventing a subsidence of the construction element.

In accordance with a prefered embodiment of the construction element according to the present invention, the outer wall extends inclined in an opposite sense relative to the corresponding inner wall.

Whereas the inclined position of the inner wall defines a passage within each cell having a downwardly tapering shape, in accordance with this embodiment the inclined outer walls of adjacent cells define a passage between adjacent cells which also tapers in a downward direction. This means, that not only in the cells themselves, but also between adjacent cells an excellent retention of filler is obtained (preventing filler from moving through the construction element in a downward direction). Further, when the outer walls have such an inclined position, the width of the space defined between the inner and outer walls at the lower side of the construction element is increased, as a result of which its positive effect (preventing subsidence) is still further improved.

Although it would be possible, that each circumferential wall is double-walled over its entire height, a special embodiment of the construction element according to the present invention is envisaged, in which the inner and outer walls of the wall meet substantially halfway between the upper and lower sides of the construction element. Further, in such an embodiment it is possible that, starting from the meeting point between the inner and outer walls, the wall extends substantially vertically towards the upper side of the construction element.

Although the tapering shape of the passages defined by the circumferential wall of the cells already is effective in retaining filler, it may be advantagious to provide each cell at the lower side of the construction element with obstruction members spanning the passage defined by the circumferential wall. As a result, between such obstruction members openings with reduced dimensions are defined, such that the filler material cannot or hardly pass through these openings.

Such obstruction members may be positionned in many patterns, for example in the shape of a cross.

It is also possible to provide corresponding additional obstruction members at the lower side of the construction element spanning the passages defined between the circumferential walls of adjacent cells. Again, such obstruction members can be arranged in many patterns, for example in the shape of a cross.

Generally, the construction element in accordance with the present invention will have standardized dimensions, for example a length of 60 centimeters and a width of 40 centimeters. However, in many applications large areas should be covered by such construction elements, requiring means for interconnecting adjoining construction elements. Thus, in accordance with a preferred embodiment of the construction element in accordance with the present invention, lateral sides of the construction element are provided with projections and recesses for cooperation with correspondingly shaped recesses and projections of other construction elements for joining said construction elements. Such cooperating projections and recesses can prevent adjacent construction elements from moving apart.

For further improving the coherence between adjacent construction elements connected by means of the projections and recesses mentioned above, according to yet another embodiment in which the cooperating projections and recesses allow a relative movement between adjacent construction elements in a direction perpendicularly to the upper and lower sides, further cooperating snap members are provided on the lateral sides of said construction elements preventing such a movement in a direction for disassembling joined construction elements. Whereas the cooperating projections and recesses prevent the construction elements from moving apart (in a direction in parallel to the upper and lower sides), the snap members prevent a movement in a direction perpendiculary to the upper and lower sides, as might occur when a construction element is loaded at its top, (for example by the weight of a vehicle).

When such snap members are present, it is advantageous when such snap members are provided with a slope facilitating a movement of the construction elements in a direction for joining. This means, that such a slope enables the snap members to reach the interlocked position in an easy manner, whereas the movement in the opposite direction (for releasing the snap members) is effictively prevented. It is noted, however, that the construction of the snap members may be such, that by an appropriate manipulation of the construction elements and/or the application of sufficient force such snap members still may be released. Than, in a manner of speaking, the connection between adjacent construction elements is not permanent, but semi-permanent.

When such projections and recesses as well as snap members are provided, it may be advantageous when the projections/recesses and snap members are positioned alternatingly along the lateral sides of the construction element.

Hereinafter the invention will be elucidated while referring to the drawing, in which different embodiments are illustrated.
Fig.1 illustrates an embodiment of the plate-shaped construction element partly in a top plan view;
Fig.2 shows a cross-section according to II-II in fig. 1;
Fig.3 shows a second embodiment of the plate-shaped construction element in a top plan view;
Fig.4 shows a side elevational view according to arrow IV in fig.3;
Fig.5 shows a cross-section according to V-V in fig.3;
Fig.6 shows a cross-section according to VI-VI in fig.3;
Fig.7 shows, on a larger scale and in cross-section, the cooperation between a projection and a recess in the embodiment of fig.3;
Fig.8 shows, on a larger scale and in cross-section, the cooperation between a snap member and a, recess in the embodiment of fig.3, and
Fig.9 shows perspectively a number of stacked construction elements according to fig.3.

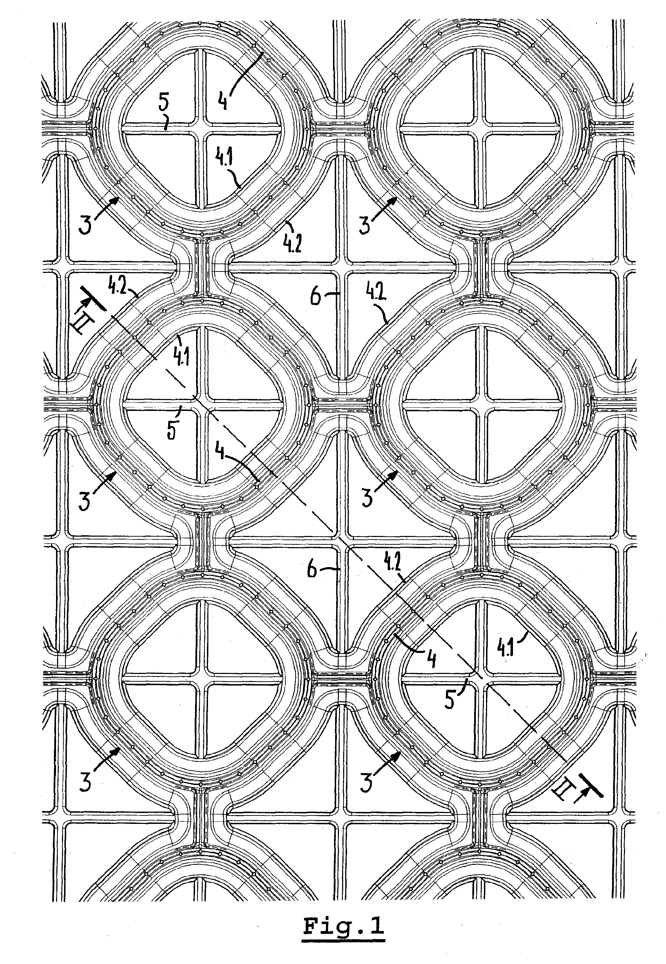

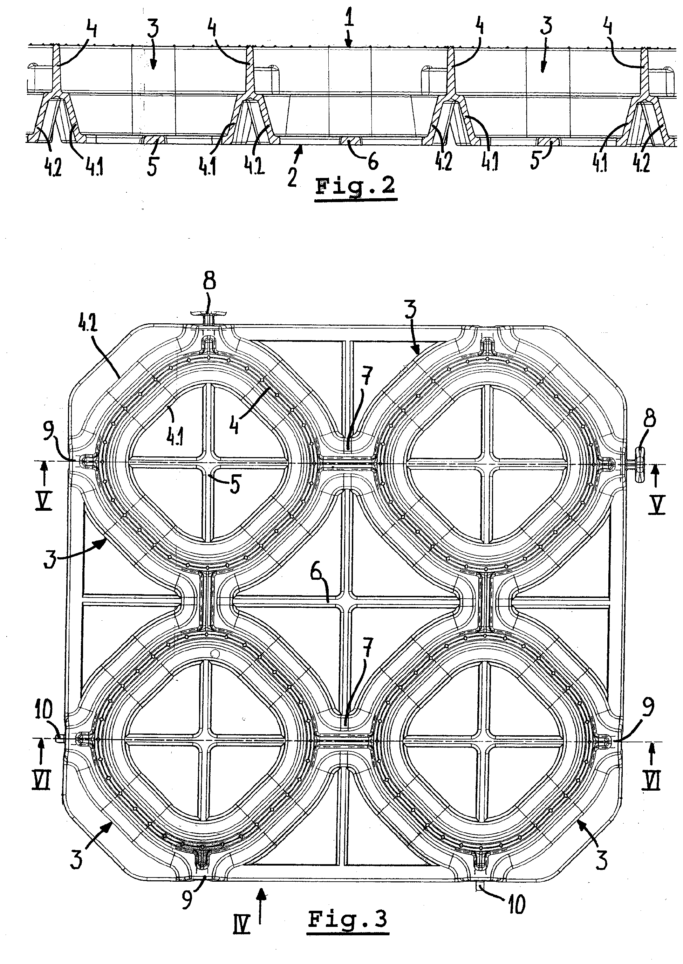

Firstly referring to fig.1 and fig.2, a plate-shaped construction element for paving surfaces and receiving filler, such as gravel, earth, grass and the like, is illustrated partly. As schematically indicated in fig.2, the plate-shaped construction element has an upper side 1 and a lower side 2. Referring to fig.1 one can see that it comprises an array of interconnected cells 3 (of which six are shown entirely in fig.1) positioned adjacently according to a predetermined pattern. Each cell comprises a circumferential wall 4 extending at least partially inclined in such a manner that the respective cell 3 at least partially tapers from the upper side 1 of the construction element towards the lower side 2.

The wall 4 of each cell 3 at its lower part is double-walled with an inner wall 4.1 and an outer wall 4.2, wherein said inner and outer walls 4.1 and 4.2 diverge as seen in a direction towards the lower side 2 of the construction element.

From fig.2 it further is clear that, in the illustrated embodiment of the construction element, the outer wall 4.2 extends inclined in an opposite sense relative to the corresponding inner wall 4.1. It is noted, however, that also an embodiment may be considered in which both outer and inner walls extend inclined in a similar sense but with different angles such as to still diverge.

In the illustrated embodiment of the construction element the inner wall 4.1 and outer wall 4.2 of the wall 4 meet substantially halfway between the upper side 1 and lower side 2 of the construction element. However, again this also can be different (for example, it is even possible that said walls meet near to or at the upper side 1 of the construction element).

Starting from the meeting point between the inner wall 4.1 and outer wall 4.2, the wall 4 extends substantially vertically towards the upper side 1 of the construction element. But is also conceivable that said part of the wall 4 extends in an inclined manner.

At the lower side 2 of the construction element each cell 3 is provided with obstruction members 5 spanning the passage defined by the circumferential inner wall 4.1. Said obstruction members 5, which in the illustrated embodiment are arranged in the shape of a cross, play a role in maintaining or retaining filler in the construction element.

Spanning the passages defined between the circumferential outer walls 4.2 of adjacent cells 3, corresponding additional obstruction members 6 are provided also at the lower side 2 of the construction element. Again, these additional obstruction members 6 are arranged in the shape of a cross.

The construction element which is illustrated partly in fig.1 may have standardized dimensions, e.g. a length of 60 cm and a width of 40 cm.

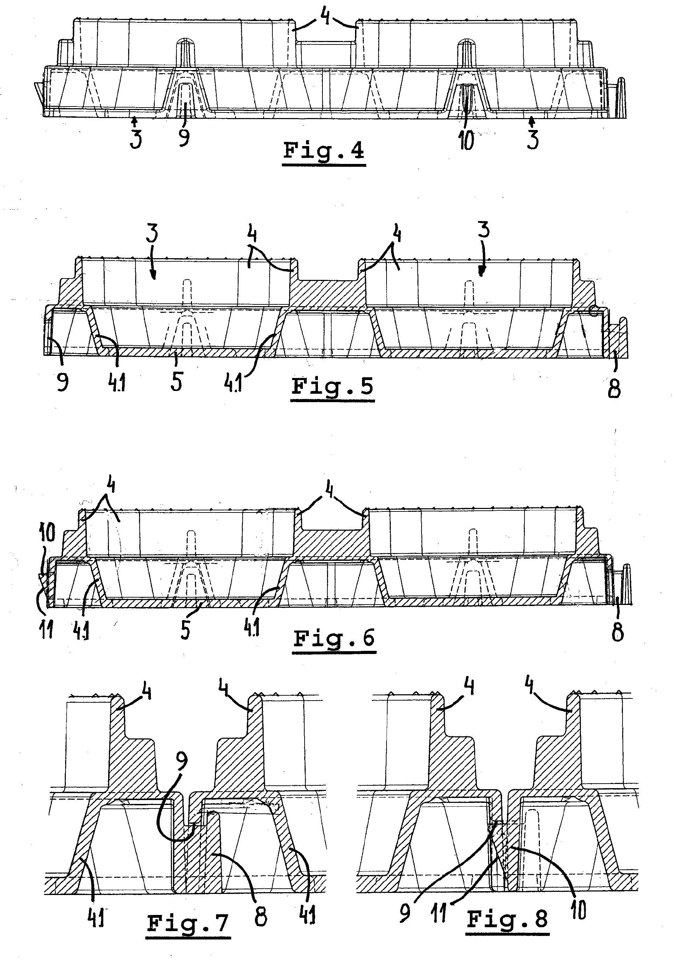

Now reference is made to figures 3-9 illustrating a second embodiment of the plate-shaped construction element according to the present invention. While this embodiment substantially corresponds to the previously described embodiment, it has a differing, smaller dimension and comprises only four cells 3. The arrangement of the walls 4, 4.1 and 4.2 is similar, however, and is not explained again. It should be noted, that in figures 5 and 6 the outer walls 4.2 seem to be absent, but this is because the cross-sections are taken along lines (V-V and VI-VI, respectively in fig.3) extending through connections 7 between adjacent cells 3 where the outer walls 4.2 are locally interrupted.

The construction element according to figures 3-9 has lateral sides which are provided with projections 8 and recesses 9 for cooperation with correspondingly shaped recesses 9 and projections 8 of adjacent construction elements for joining said construction elements. In the illustrated embodiment these cooperating projections 8 and recesses 9 allow a relative movement between adjacent construction elements in a direction perpendicularly to the upper side 1 (or lower side 2). A movement in parallel to the upper side 1 (or lower side 2) however is prevented. As a result a combined plate-shaped construction array may be realised for covering large areas.

Further, snap members 10 are provided on at least some of the lateral sides of said construction elements. In the assembled position these snap members 10 may cooperate with corresponding parts, such as some of the recesses 9, for preventing a relative movement between joined construction elements in a direction for dissassembling them.

Fig. 7 shows on an enlarged scale the cooperation between a projection 8 of a first construction element (left) and a recess 9 of a second adjacent construction element (right). The right-hand construction element may be lowered onto the left-hand construction element during joining.

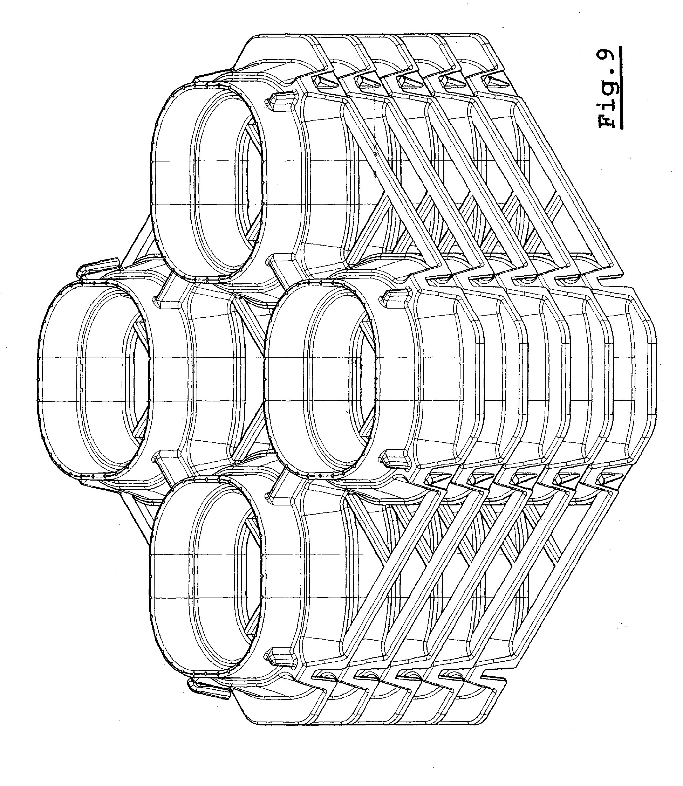

Specifically referring to fig.8, which shows the cooperation between a snap member 10 of a first construction element (right) and a recess 9 of a second adjacent construction element (left), one can see that the snap member 10 is provided with a slope 11 facilitating a relative movement of the construction elements in a direction for joining i.e. lowering the right-handed construction element onto the left-handed construction element.

It will be clear that the projections, recesses and snap members can be positioned in many patterns along said lateral sides. In a preferred manner, however, they are positioned alternatingly along the lateral sides of the construction element. When the construction element has larger dimensions (for example as suggested by fig.1) the number of projections, recesses and snap members along a lateral side may be increased.

Finally fig.9 shows a number of construction elements according to fig.3 in a stacked arrangement. In this stacked arrangement the top walls 4 of a construction element are housed in the space defined by the inner and outer walls 4.1 and 4.2, respectively, of an adjacent construction element positioned thereabove.

The invention is not limited to the embodiments described before which may be varied widely within the scope of the invention as defined by the appending claims.

## Claims

1. Plate-shaped construction element for paving surfaces and receiving filler, such as gravel, earth, grass and the like, having an upper side and a lower side and comprising an array of interconnected cells positioned adjacently according to a predetermined pattern, wherein each cell comprises a circumferential wall extending at least partially inclined in such a manner that the cell at least partially tapers from the upper side of the construction element towards the lower side, **characterized in that** the wall of the cell at least at its lower part is double-walled with an inner wall and an outer wall, wherein said inner and outer walls diverge as seen in a direction towards the lower side of the construction element.

2. Construction element according to claim 1, wherein the outer wall extends inclined in an opposite sense relative to the corresponding inner wall.

3. Construction element according to claim 1 or 2, wherein the inner and outer walls of the wall meet substantially halfway between the upper and lower sides of the construction element.

4. Construction element according to claim 3, wherein, starting from the meeting point between the inner and outer walls, the wall extends substantially vertically towards the upper side of the construction element.

5. Construction element according to any of the previous claims, wherein at the lower side of the construction element each cell is provided with obstruction members spanning the passage defined by the circumferential wall.

6. Construction element according to claim 5, wherein the obstruction members are arranged in the shape of a cross.

7. Construction member according to any of the previous claims, wherein at the lower side of the construction element additional obstruction members are provided spanning the passages defined between the circumferential walls of adjacent cells.

8. Construction element according to claim 7, wherein the additional obstruction members are arranged in the shape of a cross.

9. Construction element according to any of the previous claims, wherein lateral sides of the construction element are provided with projections and recesses for cooperation with correspondingly shaped recesses and projections of other construction elements for joining said construction elements.

10. Construction element according to claim 9, wherein the cooperating projections and recesses allow a relative movement between adjacent construction elements in a direction perpendicularly to the upper and lower sides, and wherein further cooperating snap members are provided on the lateral sides of said construction elements preventing such a movement in a direction for dissassembling joined construction elements.

11. Construction element according to claim 10, wherein the snap members are provided with a slope facilitating a movement of the construction elements in a direction for joining.

12. Construction element according to claim 10 or 11, wherein the projections/recesses and snap members are positioned alternatingly along the lateral sides of the construction element.
